# EUROPÄISCHE PATENTSCHRIFT

(11) **EP 2 769 330 B1**
(45) Veröffentlichungstag und Bekanntmachung des Hinweises auf die Patenterteilung: **07.11.2018**
(21) Anmeldenummer: 12759437.2
(22) Anmeldetag: 14.09.2012
(51) Int. Cl.: G06F 21/42, G06F 21/34, G06F 17/30, H04L 29/06

(54) **VERFAHREN ZUM AUFRUF EINES CLIENT-PROGRAMMS**
METHOD TO CALL A CLIENT PROGRAM
PROCÉDÉ D'APPEL D'UN PROGRAMME CLIENT

(30) Priorität: 18.10.2011 DE 102011084728
(43) Veröffentlichungstag der Anmeldung: 27.08.2014
(73) Patentinhaber: Bundesdruckerei GmbH, 10969 Berlin (DE)
(72) Erfinder: DIETRICH, Frank, 12437 Berlin (DE)
(74) Vertreter: Richardt Patentanwälte PartG mbB
(86) Internationale Anmeldenummer: PCT/EP2012/068124
(87) Internationale Veröffentlichungsnummer: WO 2013/056922

(56) Entgegenhaltungen:
- "Technical Guideline TR-03112-7 eCard-API-Framework - Protocols", , 7. Oktober 2011 (2011-10-07), Seiten 1-94, XP055059411, Bonn, Germany Gefunden im Internet: URL:https://www.bsi.bund.de/DE/Publikation en/TechnischeRichtlinien/technischerichtli nien_node.html [gefunden am 2013-04-12]
- BSI: "Technische Richtlinie eID-Server", , 1. April 2010 (2010-04-01), Seiten 1-51, XP055001820, Bonn Gefunden im Internet: URL:https://www.bsi.bund.de/DE/Publikation en/TechnischeRichtlinien/technischerichtli nien_node.html [gefunden am 2011-07-01]

## Beschreibung

Die Erfindung betrifft ein Verfahren zum Aufruf eines Cfient-Programm über einen Internetbrowser eines Nutzer-Computersystems, ein Computerprogrammprodukt, ein Nutzer-Computersystem sowie ein Server-Computersystem.

Aus dem Stand der Technik an sich bekannt sind sogenannte Browser-Plugins. Durch ein Browser-Plugin wird auf einem Nutzer-Computersystem, insbesondere einem Personal Computer eines Nutzers, eine zusätzliche Funktionalität zur Verfügung gestellt. Beispiele hierfür sind Adobe Reader-Plugins, um auf Internetseiten hinterlegte PDF-Dokumente direkt im Browserfenster anzeigen zu können oder Plugins, um den Bürgerclient ("AusweisApp") über das eCard-API Framework (BSI TR-03103-7) mit dem neuen elektronischen Personalausweis und einem eID-Provider kommunizieren zu lassen.
Aus DE 10 2008 000 067 ist ein Verfahren zum Lesen von Attributen aus einem ID-Token bekannt, welches durch die AusweisApp implementiert wird. Aus der DE 10 2010 028 133.6-31 ist eine Weiterbildung dieses Verfahrens bekannt. Aus der Technischen Richtline TR-03112-7 "eCard-API-Framework --Protocols", Version 1.1.2alpha ist ein Verfahren bekannt, um aus einem Webbrowser heraus auf ein Client-Programm zum Auslesen von Attributen aus einem ID-Token zuzugreifen.

Der Erfindung liegt demgegenüber die Aufgabe zugrunde, ein Verfahren zum Aufruf eines Client-Programms über einen Internetbrowser zu schaffen sowie ein entsprechendes Computerprogrammprodukt, ein Nutzer-Computersystem und ein Server-computersystem.
Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.
Nach Ausführungsformen der Erfindung ist ein Internetbrowser auf einem Nutzer-Computersystem eines Nutzers installiert. Bei dem Internetbrowser kann es sich zum Beispiel um Microsoft Internet Explorer, Safari, Google Chrome, Firefox oder ein anderes übliches Internetbrowser-Programm handeln. Insbesondere kann es sich bei dem Internetbrowser um ein Browser-Programm handeln, welches zur Ausführung auf einem Mobiltelefon, insbesondere einem sogenannten Smartphone, geeignet ist, wie zum Beispiel einem Webbrowser für Symbian Smartphones, für Smartphones mit Apple-Betriebssystem oder Android-Betriebssystem. Insbesondere kann es sich bei dem Internetbrowser um ein Browser-Programm handeln, welches keine Plugins unterstützt oder bei dem der Nutzer die Ausführung von Plugins durch eine entsprechende Nutzereinstellung blockiert hat.
Auf dem Nutzer-Computersystem ist ein Client-Programm installiert. Beispielsweise hat das Nutzer-Computersystem ein Betriebssystem mit einer sogenannten Registry, in dem sowohl das Client-Programm als auch der Internetbrowser gegebenenfalls neben weiteren auf dem Nutzer-Computersystem installierten Programmen registriert sind. Wenn das Client-Programm und der Internetbrowser auf dem Nutzer-Computersystem gestartet werden, so sorgt das Betriebssystem des Nutzer-Computersystems dafür, dass diese Programme in unterschiedlichen Prozessräumen ausgeführt werden, wie es zum Beispiel bei Windows-, Apple- , Linux-, Symbian- oder Linux-Betriebssystemen der Fall ist. Im Unterschied zu einem Browser-Plugin, welches in demselben Prozessraum aufläuft wie der Internetbrowser, laufen nach Ausführungsformen der Erfindung der Internetbrowser und das Client-Programm in unterschiedlichen Prozessräumen.

Unter einem "Nutzer-Computersystem" wird hier ein Computersystem eines Nutzers verstanden, wie zum Beispiel ein Personal Computer (PC), ein Tablet Computer, ein Smartphone oder ein anderes mobiles Endgerät mit einer drahtlosen Schnittstelle, wie zum Beispiel einer WLAN- und/oder Mobilfunk-Schnittstelle, insbesondere eine sogenannte batteriebetriebene mobile appliance.

Bei dem "Client-Programm" kann es sich um ein Anwendungsprogramm handeln, welches auf dem Nutzer-Computersystem installiert ist. Beispielsweise kann das Client-Programm dazu ausgebildet sein, ein pdf Dokument oder ein anderes Dokument zu öffnen und wiederzugeben, d.h. für ein sogenanntes Rendering eines Dokuments.

Beispielsweise kann das Client-Programm dazu ausgebildet sein, Daten mit einem Serverprogramm des Servercomputers auszutauschen, um eine Datenverarbeitungsoperation durchzuführen. Insbesondere kann das Client-Programm nutzerseitig die Funktionalität der AusweisApp implementieren, um ein sicheres und vertrauenswürdiges Auslesen von Attributen des Nutzers aus dessen ID-Token, beispielsweise dessen Personalausweis, zu ermöglichen, wobei hierzu im Unterschied zum Stand der Technik kein Browser-Plugin erforderlich ist.

Nach Ausführungsformen der Erfindung wird über den Internetbrowser des Nutzer-Computersystems eine Nachricht an ein Server-Computersystem übertragen, wobei die Nachricht zumindest einen Parameter zur Kommunikation des Client-Programms mit dem Internetbrowser beinhaltet.

Unter einem "Server-Computersystem" wird hier insbesondere ein Server-Computer verstanden, welcher eine Internet-Schnittstelle aufweist. Bei dem Server-Computersystem kann es sich insbesondere um ein ID-Provider-Computersystem handeln, das heißt ein Computersystem zum sicheren und vertrauenswürdigen Auslesen von Attributen aus dem ID-Token sowie zur signierten Weiterleitung dieser Attribute. Ein solches Server-Computersystem wird auch als eID-Provider bezeichnet, d.h. ein Computersystem zur Verfügungstellung einer elektronischen Identität des Nutzers.

Durch den in der Nachricht beinhalteten Parameter wird eine Möglichkeit zur Kommunikation des Client-Programms mit dem Internetbrowser geschaffen. Diese Kommunikationsmöglichkeit ist insbesondere für eine Rückmeldung des Client-Programms an den Internetbrowser vorteilhaft, nachdem aufgrund der Ausführung des Client-Programms ein bestimmtes Ergebnis vorliegt.

Die Nachricht kann übertragen werden, indem der Nutzer mit dem Internetbrowser eine Webseite des Servercomputers aufruft und dort den Parameter eingibt. Dies kann auch automatisch durch das Nutzercomputersystem erfolgen, ohne manuelle Eingabe. Alternativ ist die Nachricht als SAML request ausgebildet.

Aufgrund des Empfangs der Nachricht von dem Nutzer-Computersystem erzeugt das Server-Computersystem dynamisch einen Uniform Resource Locator (URL) nach einem URL-Schema. Das URL-Schema ist so ausgebildet, dass die von dem Server-Computersystem erzeugte URL zum Aufruf des Client-Programms verwendet werden kann. Insbesondere kann die URL gemäß RFC 3986 der Network Working Group ausgebildet sein.

Die URL beinhaltet dabei den zumindest einen Parameter, welchen das Server-Computersystem mit der Nachricht von dem Nutzer-Computersystem empfangen hat. Die URL wird in einem Browserfenster des Internetbrowsers auf dem Nutzer-Computersystem angezeigt, sodass ein Nutzer die URL zum Beispiel durch Anklicken auswählen kann. Aufgrund der Auswahl der URL durch den Nutzer wird durch das Betriebssystem des Nutzer-Computersystems das Client-Programm gestartet und der zumindest eine Parameter, welcher in der URL beinhaltet ist, in das Programm eingegeben, um eine Rückmeldung des Programms an den Internetbrowser zu ermöglichen. Ein Ergebnis der Ausführung des Client-Programms wird anschließend von dem Client-Programm an den Internetbrowser mit Hilfe dieses zumindest einen Parameters kommuniziert.

Ausführungsformen der Erfindung sind besonders vorteilhaft, da auf ein Plugin für den Internetbrowser verzichtet werden kann, indem nämlich die entsprechende Funktionalität anstelle des Browser-Plugins durch das Client-Programm realisiert wird.

Dies hat den Vorteil, dass kein Plugin über das Internet auf das Nutzer-Computersystem geladen werden braucht, was tendenziell ein Sicherheitsrisiko darstellt, zumal ein Browser-Plugin in demselben Prozessraum läuft wie der Internetbrowser. Von besonderem Vorteil ist ferner, dass auf diese Art und Weise lnternetbrowser von mobilen Endgeräten, insbesondere Smartphones, um zusätzliche Funktionen ergänzt werden können, was bislang nicht möglich war, da solche Internetbrowser Plugins üblicherweise nicht zulassen.

Ausführungsformen der Erfindung sind besonders vorteilhaft, da eine sehr hohe Sicherheit von Browser-initiierten Prozessaufrufen gewährleistet wird, weil lediglich Parameter z.B. des Betriebssystems des Nutzer-Computersystems übergeben werden, sodass eine Manipulationsmöglichkeit durch einen Angreifer erheblich eingeschränkt ist.

Bei einer Ausführungsform der Erfindung werden eine oder mehrere der folgenden Parameter mit der Nachricht von dem Nutzer-Computersystem an das Server-Computersystem übertragen, damit das Server-Computersystem diese in die dynamische Erzeugung der URL einfließen lassen kann:
- Name des Internetbrowsers,
- einen Prozessidentifikator des Internetbrowsers in einem Betriebssystem (105) des Nutzer-Computersystems,
- eine Antwort-URL zum Aufruf des Internetbrowsers durch das Client-Programm,
- einen Fensteridentifikator eines Anzeigefensters des Internetbrowers in dem Betriebssystem des Nutzer-Computersystems,
- eine Speicheradresse oder eine Ergebnis-URL zum Abrufen eines Ergebnisses der Ausführung des Client-Programms durch den internet-browser.

Nach einer Ausführungsform der Erfindung hat die URL einen vordefinierten statischen Teil sowie einen dynamischen Teil. Der vordefinierte statische Teil der URL kann zum Beispiel den Programmnamen des Client-Programms beinhalten, unter dem dieses in dem Betriebssystem des Nutzer-Computersystems registriert ist. Der dynamische Teil der URL beinhaltet dagegen den zumindest einen Parameter, welchen das Server-Computersystem von dem Nutzer-Computersystem empfangen hat. Ferner kann der dynamische Teil weitere Parameter beinhalten, welche zum Beispiel in dem Server-Computersystem gespeichert sind.

Nach einer weiteren Ausführungsform der Erfindung wird die Nachricht von dem Nutzer-Computersystem in Form einer SAML-Anforderung empfangen, beispielsweise von einem sogenannten SAML-Requester (vgl. Security Assertion Markup Language (SAML) V2.0 Technical Overview, OASIS, Committee Draft 02, 25. März 2008). Von dem Nutzer-Computersystem wird in die SAML-Anforderung der zumindest eine Parameter eingetragen, d.h. gespeichert, und die SAML-Anforderung wird dann an das Server-Computersystem weitergeleitet. Diese Weiterleitung der SAML-Anforderung kann aufgrund einer manuellen Eingabe des Nutzers erfolgen oder durch Ausführung eines Browser-Scripts in Form eines "Autosubmit".

Nach einer Ausführungsform der Erfindung wird aufgrund der Selektion der URL durch den Nutzer serverseitig ein Serverprogamm gestartet, welches mit dem Client-Programm interoperabel ist. Durch Ausführung des Serverprogramms und des Client-Programms sowie dem damit einhergehenden Datenaustausch zwischen dem Serverprogramm und dem Client-Programm wird eine Datenverarbeitungs- und/oder Kommunikationsoperation durchgeführt, die ein bestimmtes Ergebnis hat. Dieses Ergebnis wird dann zu dem Internetbrowser mit Hilfe des zumindest einen Parameter kommuniziert.

Nach einer Ausführungsform der Erfindung hat das Server-Computersystem die Rolle eines SAML-Responders, der aufgrund der SAML-Anforderung eine SAML-Antwort, das heißt eine SAML-Response, generiert. Die SAML-Response beinhaltet das Ergebnis der von dem Client-Programm und dem Serverprogramm ausgeführten Datenverarbeitungsoperation und wird über den Internetbrowser zurück an den SAML-Requester gesendet.

Nach einer Ausführungsform der Erfindung werden durch die Interaktion des Client-Programms und des Serverprogramms die folgenden Schritte durchgeführt: Ausgabe einer Aufforderung an den Nutzer zur Authentifizierung gegenüber einem ID-Token, der dem Nutzer zugeordnet ist, Authentifizierung des Server-Computersystems gegenüber dem ID-Token, nach erfolgreicher Authentifizierung des Nutzers und des Server-Computersystems gegenüber dem ID-Token, Lesezugriff des Server-Computersystems auf zumindest ein in dem ID-Token gespeichertes Attribut, wobei es sich bei dem gelesenen Attribut um das Ergebnis handelt

In einem weiteren Aspekt betrifft die Erfindung ein Nutzer-Computersystem mit einem Betriebssystem zur Ausführung eines Client-Programms und eines Internetbrowsers in separaten Prozessräumen, wobei der Internetbrowser zur Übertragung einer Nachricht an ein Server-Computersystem ausgebildet ist, wobei die Nachricht zumindest einen Parameter zur Kommunikation des Client-Programms mit dem Internetbrowser beinhaltet, und wobei das Betriebssystem dazu eingerichtet ist, dass das Client-Programm aufgrund der Auswahl einer URL durch einen Benutzer gestartet wird und dabei zumindest ein Parameter in das Client-Programm eingegeben wird, wobei die Auswahl der URL durch Selektion der URL auf einer von dem Internetbrowser angezeigten Webseite erfolgt, wobei die URL den zumindest einen Parameter beinhaltet, wobei das Client-Programm so ausgebildet ist, dass ein Ergebnis der Ausführung des Client-Programms mit Hilfe des zumindest einen Parameters von dem Client-Programm an den Internetbrowser kommuniziert wird.

Nach einer Ausführungsform der Erfindung hat das Nutzer-Computersystem eine Schnittstelle zu einem ID-Token, wie zum Beispiel ein RFID-Lesegerät oder ein Chipkarten-Lesegerät.

Unter einem "ID-Token" wird erfindungsgemäß insbesondere ein tragbares elektronisches Gerät, wie zum Beispiel ein sogenannter USB-Stick, verstanden oder ein Dokument, insbesondere ein Wert- oder Sicherheitsdokument. Der ID-Token hat einen elektronischen Speicher, in dem zumindest ein Attribut gespeichert ist.

Unter einem "Dokument" werden erfindungsgemäß insbesondere papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Nach Ausführungsformen der Erfindung ist der Nutzer Inhaber eines ID-Tokens, wie zum Beispiel eines elektronischen Ausweisdokuments, insbesondere eines elektronischen Reisepass oder eines elektronischen Personalausweis.

In einem weiteren Aspekt betrifft die Erfindung ein Server-Computersystem. Insbesondere kann es sich bei dem Server-Computersystem um ein ID-Provider-Computersystem handeln.

Durch Ausführungsformen der Erfindung wird ein Datenverarbeitungssystem geschaffen, welches einen ID-Token, ein Nutzer-Computersystem, ein Dienst-Computersystem, das heißt z.B. einen SAML-Requester, und ein Server-Computersystem, das heißt z.B. einen SAML-Responder, beinhaltet.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Datenverarbeitungssystems,
- Figur 2: ein Blockdiagramm einer weiteren Ausführungsform eines erfindungsgemäßen Datenverarbeitungssystems,
- Figur 3: ein Flussdiagramm einer Ausführungsform eines erfindungsgemäßen Verfahrens.

Elemente der nachfolgenden Ausführungsformen, die einander entsprechen oder gleichen, werden jeweils mit denselben Bezugszeichen gekennzeichnet.

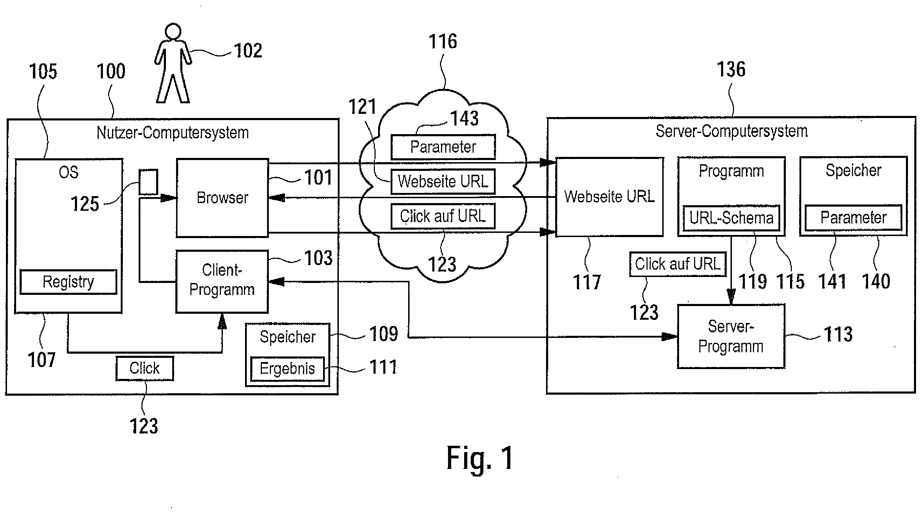

Die Figur 1 zeigt ein Nutzer-Computersystem 100 mit einem Internetbrowser 101. Bei dem Nutzer-Computersystem 100 kann es sich zum Beispiel um einen PC oder ein batteriebetriebenes mobiles Endgerät, wie zum Beispiel ein Smartphone, einen Tablet Computer oder einen anderen mobilen Computer mit drahtloser Kommunikations-Schnittstelle handeln. Der Internetbrowser 101 ist vorzugsweise so ausgebildet, dass er Plugins nicht unterstützt. Alternativ ist der Internetbrowser 101 so konfiguriert, dass die Ausführung von Plugins nicht erlaubt ist.

Anstelle eines Plugins für den Internetbrowser 101 ist auf dem Nutzer-Computersystem 100 ein Client-Programm 103 installiert. Das Client-Programm 103 kann eine bestimmte Funktion implementieren, die auf dem Nutzer-Computersystem 100, ausgeführt wird. Bei dieser Funktion kann es sich zum Beispiel um ein Rendering von Daten, zum Beispiel PDF-Dokumenten, oder eine andere Anwendungsfunktion, handeln, wie zum Beispiel der sichere Zugriff auf den elektronischen Personalausweis, wie er im Stand der Technik durch ein Plugin, nämlich die AusweisApp, implementiert wurde.

Das Nutzer-Computersystem 100 hat ein Betriebssystem (Operating System - OS) 105 mit einer sogenannten Registry 107, in der die installierten Programme, das heißt hier zumindest der Internetbrowser 101 und das Client-Programm 103, registriert sind. Beispielsweise ist in der Registry 107 für den Internetbrowser 101 der Programmname "Microsoft Internet Explorer" und für das Client-Programm 103 der Programmname "PDF Renderer" bzw. "AusweisApp" oder ,eIDAPP" eingetragen. Zusätzlich können durch das Betriebssystem 105 jeder Instanz des auf dem Nutzer-Computersystem 100 ausgeführten Internetbrowsers 101 und des Client-Programms jeweils ein Prozessidentifikator und/oder ein Fensteridentifikator zugeordnet sein.

Der Prozessidentifikator einer ausgeführten Programminstanz dient dabei zur Identifizierung des in dem Nutzer-Computersystem 100 für die betreffende Instanz eines der Programme reservierten Prozessraums, das heißt eines bestimmten Adressraums, der dieser Instanz ausschließlich vorbehalten ist. Der Fensteridentifikator dient zur Identifikation eines Anzeigefensters, das heißt eines sogenannten Windows, der betreffenden Instanz eines der Programme.

Das Nutzer-Computersystem 100 hat ferner einen Speicher 109, wie zum Beispiel einen Arbeitsspeicher, das heißt eine Random Access Memory (RAM), zur Speicherung eines Ergebnis 111 der Ausführung des Client-Programms 103. Bei diesem Ergebnis 111 kann es sich um das Ergebnis einer Datenverarbeitungsoperation handeln, die das Client-Programm 103 ausgeführt hat, wie zum Beispiel dem sogenannten Rendering einer PDF-Datei, das heißt der Berechnung von anzuzeigenden Bilddaten aus der PDF-Datei.

Zur Durchführung einer Datenoperation kann es je nach Ausführungsform erforderlich sein, dass das Client-Programm 103 mit einem Serverprogramm 113 eines Server-Computersystems 136 interagiert, das heißt Daten austauscht. Dies ist insbesondere dann der Fall, wenn das Client-Programm 103 die Funktionalität der AusweisApp implementiert. In diesem Fall kann das Ergebnis 111 die aus dem elektronischen Personalausweis ausgelesenen Attribute beinhalten.

Das Nutzer-Computersystem 100 ist mit dem Server-Computersystem 136 über ein Netzwerk 116, wie zum Beispiel dem Internet, verbunden. Das Server-Computersystem 136 hat ein Programm 115 zur Erzeugung einer Webseite 117, welche mit Hilfe des Internetbrowsers 101 auf dem Nutzer-Computersystem 100 angezeigt werden kann. Das Programm 115 implementiert ein URL-Schema 119.

Das URL-Schema 119 kann die folgende allgemeine Syntax aufweisen:
<myURL-Type>://<myFavouriteApp>/<Path><separator><parameters>

Bei dem Teil "<myURL-Type>://<myFavouriteApp>/" dieses URL-Schemas kann es sich dabei um einen statischen Teil handeln, der ein bestimmtes vordefiniertes Client-Programm identifiziert, wobei es sich bei myFavouriteApp um die Angabe des Namens des Client-Programms handelt. Der Teil "<Path><separator><parameters>" der URL kann dagegen dynamisch erzeugt werden, indem dort verschiedene veränderliche Parameter eingetragen werden.

Für den Fall, dass es sich bei dem Client-Programm 103 um die elDApp handelt, kann das URL-Schema 119 wie folgt lauten:
eID://eIDApp/path?param1=aaa&param2=bbb&param3=ccc

Durch den statischen Teil der URL, das heißt eID://eIDApp/, wird das Client-Programm 103, das heißt hier die eIDApp identifiziert, wohingegen die nachfolgenden Parameter, die in dem dynamischen Teil path?param1=aaa&param2=bbb&param3=ccc der URL angegeben sind, veränderlich sein können.

Der <Path>-Parameter in einer URL bezeichnet einen Endpunkt, den die empfangene Applikation auswerten kann und an Hand dessen eine semantische Interpretation der Parameter möglich wird. Dieser Parameter ist vergleichbar mit einem Methodenbezeichner in prozeduralen und objektorientierten Programmiersprachen. Die nachfolgenden Parameter entsprechen dann den Argumenten der Methode. Für den Fall dass es sich beim Client Programm 103 um die eIDApp handelt, kann damit die URL z. B. wie folgt lauten:
eID://eIDApp/method1?param1=aaa&param2=bbb&param3=ccc
oder
eID://eIDApp/method2?paramA=111&paramB=222

In beiden Fällen wird die eIDApp als Consumer der URL aufgerufen, wird sich jedoch unterschiedlich verhalten.

Das Server-Computersystem 136 kann einen Speicher 140 aufweisen, in dem zumindest einige der Parameter 141 des dynamischen Teils des URL-Schemas 119 gespeichert sind. Ein anderer Teil dieser Parameter 143 kann dagegen von dem Nutzer-Computersystem 100 an das Server-Computersystem 136 übertragen werden.

Im Betrieb ruft zum Beispiel ein Nutzer 102 des Nutzer-Computersystems 100 mit Hilfe des Internetbrowsers 101 die Webseite 117 des Server-Computersystems 136 auf. Bei diesem Aufruf werden ein oder mehrere Parameter 143 von dem Nutzer-Computersystem 100 über den Internetbrowser 101 an das Server-Computersystem 136 übertragen, wie zum Beispiel der Parameter 1, das heißt param1=aaa. Bei diesem Parameter 143 kann es sich zum Beispiel um eine Adresse in dem Speicher 109 handeln, an welcher das Ergebnis 111 gespeichert werden soll. Alternativ oder zusätzlich kann es sich bei dem Parameter 143 um einen oder mehrere der folgende Parameter handeln:
- Name des Internetbrowsers 101,
- einen Prozessidentifikator des Internetbrowsers in dem Betriebssystem 105 des Nutzer-Computersystems 100,
- eine Antwort-URL zum Aufruf des Internetbrowsers 101 durch das Client-Programm 103,
- einen Fensteridentifikator eines Anzeigefensters des Internetbrowers in dem Betriebssystem des Nutzer-Computersystems,
- eine Speicheradresse oder eine Ergebnis-URL zum Abrufen eines Ergebnisses der Ausführung des Client-Programms durch den Internet-browser.

Aufgrund des Aufrufs der Webseite 117 und der Übertragung des Parameters 143 wird seitens des Server-Computersystems 136 die Ausführung des Programms 115 gestartet, sodass dieses Programm eine URL mit Hilfe des URL-Schemas 119 erzeugt. Diese URL beinhaltet den statischen vordefinierten Teil, der z.B. in dem Speicher 140 gespeichert sein kann, sowie die Parameter 141, welche das Programm 115 ebenfalls aus dem Speicher 140 ausliest.

Diese von dem Programm 115 erzeugte URL 121 wird in die Webseite 117 von dem Programm 115 eingefügt, sodass sie von dem Internetbrowser 101 angezeigt wird. Der Nutzer 102 kann dann die URL 121 selektieren, indem er beispielsweise mit seiner Computermaus einen Mausklick 123 auf die URL ausführt. Aufgrund dieses Mausklicks startet das Betriebssystem 105 das durch den statischen Teil der URL 121 identifizierte Client-Programm 103 und übergibt außerdem die in dem dynamischen Teil der URL 121 angegebenen Parameter ebenfalls an dieses Client-Programm 103.

Je nach Ausführungsform wird außerdem auf Seiten des Server-Computersystems 136 aufgrund des Mausklick 123 das Serverprogramm 113 gestartet. Beispielsweise wird hierzu der Mausklick von dem Programm 115 erfasst und ein entsprechendes Signal generiert, welches das Serverprogramm 113 daraufhin startet.

Das Client-Programm 103 und gegebenenfalls das Serverprogramm 113 führen dann eine Datenverarbeitungsoperation durch, wozu es erforderlich sein kann, dass das Client-Programm 103 und das Serverprogramm 113 Daten, das heißt beispielsweise Kommandos, kryptografische Daten und/oder Nutzerdaten, über das Netzwerk 116 austauschen. Das Ergebnis 111 dieser Datenverarbeitungsoperation wird dann zum Beispiel in dem Speicher 109 gespeichert oder in einem anderen Speicher, zum Beispiel des Server-Computersystems 136, welcher in der URL 121 spezifiziert ist. Das Client-Programm 103 sendet, nachdem das Ergebnis 111 vorliegt, ein Signal 125 zum Beispiel über das Betriebssystem 105 an den Internet-browser 101, sodass dieser auf das Ergebnis 111 zugreifen kann, um es in einem Browserfenster anzuzeigen.

Zur Übertragung dieses Signals 125 kann der Parameter 143 dienen, welcher den Internetbrowser 101 identifiziert, beispielsweise über einen Prozessidentifikator, einen Fensteridentifikator oder eine URL, die den Internetbrowser 101 in dem Nutzer-computersystem 100 identifiziert. Beispielsweise kann ein weiteres Browserfenster des Internetbrowsers 101 geöffnet werden, um das Ergebnis 111 anzuzeigen.

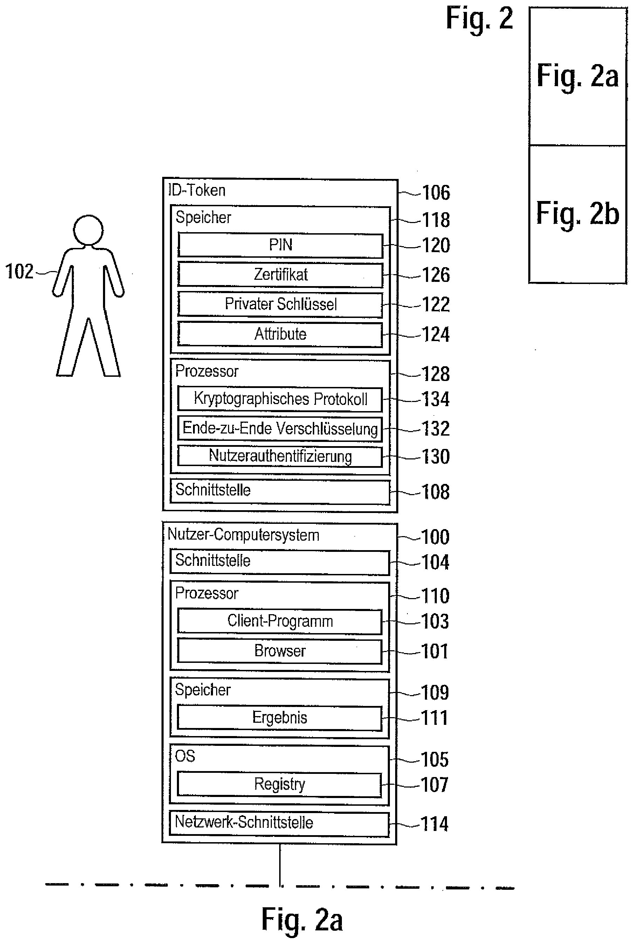

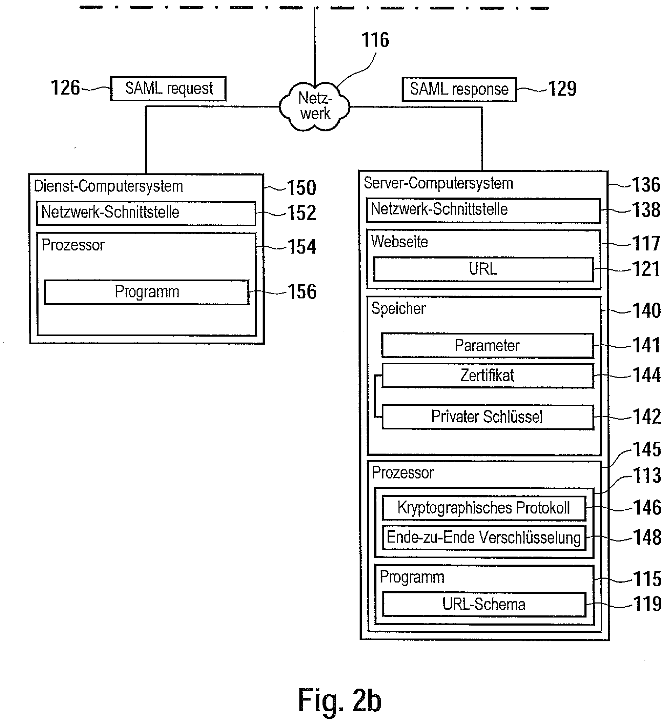

Die Figur 2 zeigt eine Weiterbildung der Ausführungsform gemäß Figur 1, wobei das Client-Programm 103 hier als eIDApp ausgebildet ist. Das Nutzer-Computersystem 100 hat bei dieser Ausführungsform eine Schnittstelle 104 zur Kommunikation mit einem ID-Token 106, beispielsweise einem elektronischen Personalausweis, der eine entsprechende Schnittstelle 108 aufweist.

Das Nutzer-Computersystem 100 hat zumindest einen Prozessor 110 zur Ausführung des Client-Programms 103 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines Server-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das Server-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem Server-Computersystem 136 nach demselben oder einem anderen kryptographischen Protokoll authentifizieren.

Die Programminstruktionen 132 dienen zur Ende-zu-Ende-Verschlüsselung von zwischen dem ID-Token 106 und dem Server-Computersystem 136 übertragenen Daten, zumindest aber der von dem Server-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem Server-Computersystem 136 vereinbart wird.

Alternativ zu der in der Figur 2 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2 oder 3-Chipkarten-Terminal, kann auch die Eingabe der PIN erfolgen.

Das Server-Computersystem 136 hat eine Netzwerk-Schnittstelle 138 zur Kommunikation über das Netzwerk 116. Das Server-Computersystem 136 hat ferner einen Speicher 140, in dem ein privater Schlüssel 142 des Server-Computersystems 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln.

Das Server-Computersystem 136 hat ferner zumindest einen Prozessor 145 zur Ausführung von Programminstruktionen 146 und 148 des Server-Programms 113. Durch Ausführung der Programminstruktionen 146 werden die das Server-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des Server-Computersystems 136 implementiert.

Die Programminstruktionen 148 dienen zur Implementierung der Ende-zu-Ende-Verschlüsselung auf Seiten des Server-Computersystems 136, beispielsweise basierend auf dem symmetrischen Schlüssel, der anlässlich der Ausführung des kryptographischen Protokolls zwischen dem ID-Token 106 und dem Server-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das Server-Computersystem 136 befindet sich vorzugsweise in einer besonders geschützten Umgebung, insbesondere in einem so genannten Trust-Center, sodass das Server-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 über den Internet-Browser 101 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten,

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 ein oder mehrere Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Beispielsweise ist es für die Eröffnung eines Bankkontos oder den Kauf eines Mobiltelefons mit einem dazugehörigen Vertrag erforderlich, dass der Nutzer 102 seine Identität gegenüber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem ID-Token 106 ersetzt.

Je nach Anwendungsfall muss der Nutzer 102 aber nicht seine Identität gegenüber dem Dienst-Computersystem 150 offenbaren, sondern es reicht die Mitteilung, zum Beispiel nur eines der Attribute aus. Beispielsweise kann der Nutzer 102 über eines der Attribute einen Nachweis erbringen, dass er zu einer bestimmten Personengruppe gehört, die zugangsberechtigt für auf dem Dienst-Computersystem 150 zum Download bereitgehaltener Daten ist. Beispielsweise kann ein solches Kriterium ein Mindestalter des Nutzers 102 sein oder die Zugehörigkeit des Nutzers 102 zu einem Personenkreis, der auf bestimmte vertrauliche Daten eine Zugriffsberechtigung hat.

Zur Inanspruchnahme des von dem Dienst-Computersystem 150 zur Verfügung gestellten Dienstes wird prinzipiell beispielsweise wie folgt vorgegangen:
1. Authentifizierung des Nutzers 102 gegenüber dem ID-Token 106.
   Der Nutzer 102 authentifiziert sich gegenüber dem ID-Token 106. Bei einer Implementierung mit PIN gibt der Nutzer 102 hierzu seine PIN beispielsweise über das Nutzer-Computersystem 100 oder einen daran angeschlossenen Chipkarten-Terminal ein, nachdem der Nutzer 102 hierzu durch das Client-Programm 103 aufgefordert worden ist. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
2. Authentifizierung des Server-Computersystems 136 gegenüber dem ID-Token 106.
   Hierzu wird eine Verbindung zwischen dem ID-Token 106 und dem Server-Computersystem 136 über das Nutzer-Computersystem 100 und das Netzwerk 116 hergestellt. Beispielsweise überträgt das Server-Computersystem 136 sein Zertifikat 144 über diese Verbindung an den ID-Token 106. Durch die Programminstruktionen 134 wird dann eine so genannte Challenge generiert, d.h. beispielsweise eine Zufallszahl. Diese Zufallszahl wird mit dem in dem Zertifikat 144 beinhalteten öffentlichen Schlüssel des Server-Computersystems 136 verschlüsselt. Das resultierende Chiffrat wird von dem ID-Token 106 über die Verbindung an das Server-Computersystem 136 gesendet. Das Server-Computersystem 136 entschlüsselt das Chiffrat mit Hilfe seines privaten Schlüssels 142 und erhält so die Zufallszahl, Die Zufallszahl sendet das Server-Computersystem 136 über die Verbindung an den ID-Token 106 zurück. Durch Ausführung der Programminstruktionen 134 wird dort geprüft, ob die von dem Server-Computersystem 136 empfangene Zufallszahl mit der ursprünglich generierten Zufallszahl, d.h. der Challenge, übereinstimmt. Ist dies der Fall, so gilt das Server-Computersystem 136 als gegenüber dem ID-Token 106 authentifiziert. Die Zufallszahl kann als symmetrischer Schlüssel für die Ende-zu-Ende Verschlüsselung verwendet werden.
3. Nachdem sich der Nutzer 102 erfolgreich gegenüber dem ID-Token 106 authentifiziert hat, und nachdem sich das Server-Computersystem 136 erfolgreich gegenüber dem ID-Token 106 authentifiziert hat, erhält das Server-Computersystem 136 eine Leseberechtigung zum Auslesen, eines, mehrerer oder aller der in dem geschützten Speicherbereich 124 gespeicherten Attribute. Aufgrund eines entsprechenden Lesekommandos, welches das Server-Computersystem 136 über die Verbindung an den ID-Token 106 sendet, werden die angeforderten Attribute aus dem geschützten Speicherbereich 124 ausgelesen und durch Ausführung der Programminstruktionen 132 verschlüsselt. Die verschlüsselten Attribute werden über die Verbindung an das Server-Computersystem 136 übertragen und dort durch Ausführung der Programminstruktionen 148 entschlüsselt. Dadurch erhält das Server-Computersystem 136 Kenntnis der aus dem ID-Token 106 ausgelesenen Attribute.

Diese Attribute werden von dem Server-Computersystem mit Hilfe seines Zertifikats 144 signiert und über das Nutzer-Computersystem 100 an das Dienst-Computersystem 150 übertragen. Vor der Weiterleitung der Attribute von dem Nutzer-Computersystem werden diese z.B. von dem Internet Browser 101 angezeigt, damit der Nutzer 102 diese bestätigen kann.

Dadurch wird das Dienst-Computersystem 150 über die aus dem ID-Token 106 ausgelesenen Attribute in Kenntnis gesetzt, sodass das Dienst-Computersystem 150 diese Attribute anhand der vorgegebenen ein oder mehreren Kriterien prüfen kann, um danach ggf. den von dem Benutzer 102 angeforderten Dienst zu erbringen.

Durch die Notwendigkeit der Authentifizierung des Nutzers 102 gegenüber dem ID-Token 106 und der Authentifizierung des Server-Computersystems 136 gegenüber dem ID-Token 106 ist der notwendige Vertrauensanker geschaffen, sodass das Dienst-Computersystem 150 sicher sein kann, dass die ihm von dem Server-Computersystem 136 mitgeteilten Attribute des Nutzers 102 zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das Server-Computersystem 136. Es ist aber grundsätzlich auch möglich, dass sich zunächst das Server-Computersystem 136 gegenüber dem ID-Token 106 authentifizieren muss und erst nachfolgend der Nutzer 102.

In dem ersten Fall ist der ID-Token 106 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des Server-Computersystems 136.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das Server-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

Von besonderem Vorteil ist die Nutzbarmachung des ID-Tokens 106 für zum Beispiel E-Commerce und E-Government-Anwendungen, und zwar medienbruchfrei und rechtssicher aufgrund des durch die Notwendigkeit der Authentifizierung des Nutzers 102 und des Server-Computersystems 136 gegenüber dem ID-Token 106 gebildeten Vertrauensankers. Von besonderem Vorteil ist ferner, dass eine zentrale Speicherung der Attribute verschiedener Nutzer 102 nicht erforderlich ist, sodass die im Stand der Technik bestehenden Datenschutzprobleme hiermit gelöst sind. Was die Bequemlichkeit der Anwendung des Verfahrens betrifft, ist von besonderem Vorteil, dass eine vorherige Registrierung des Nutzers 102 zur Inanspruchnahme des Server-Computersystems 136 nicht erforderlich ist.

Vorzugsweise erfolgt die Implementierung des in der Figur 2 gezeigten Datenverarbeitungssystems mit Hilfe der Security Assertion Markup Language (SAML). In diesem Fall hat das Dienst-Computersystem 150 die Rolle eines SAML-Requester und das Server-Computersystem 136 die Rolle eines SAML-Responders. In dem hier betrachteten Anwendungsfall des Auslesens von Attributen aus dem ID-Token 106 handelt es sich bei dem Dienst-Computersystem 150 um einen Attribut-Requester und bei dem Server-Computersystem 136 um eine Attribute Authority, die eine SAML-Assertion mit den ausgelesenen Attributen produziert.

Aufgrund der oben beschriebenen Auswahl eines Dienstes oder eines Produkts auf der Webseite des Dienst-Computersystems durch den Nutzer 102 generiert das Dienst-Computersystem 150 einen SAML-Request 126, welchen das Dienst-Computersystem 150 an den Internetbrowser 101 des Nutzer-Computersystems 100 sendet. Der SAML-Request 126 beinhaltet eine Attributspezifizierung derjenigen Attribute des ID-Tokens 106, deren Kenntnis das Dienst-Computersystem 150 verlangt, um den geforderten Dienst zu erbringen oder die Bestellung des von dem Nutzer 102 gewünschten Produkts entgegenzunehmen.

Der SAML-Request 126 wird mit Hilfe des Internetbrowsers 101 über das Netzwerk 116 an das Server-Computersystem 136 weitergeleitet. Dies kann durch eine manuelle Interaktion des Nutzers 102 mit dem Internetbrowser 101 erfolgen oder automatisch durch ein sogenanntes Autosubmit, das heißt die Ausführung eines entsprechenden Skripts durch den Internetbrowser 101. Vor der Weiterleitung des SAML-Requests 126 werden durch das Nutzer-Computersystem 100 die Parameter 143 in den SAML-Request 126 eingetragen, wie zum Beispiel der Browsertyp oder Browsername des Internetbrowsers 101 und/oder der Prozessidentifikator des Prozessraums des Internetbrowsers 101, welcher dem Internetbrowser 101 von dem Betriebssystem 105 zugewiesen worden ist.

Aufgrund des Empfangs des SAML-Requests 126 durch das Server-Computersystem 136 wird das Programm 115 gestartet. Das Programm 115 wendet dann das URL-Schema 119 an, um die URL 121 zu erzeugen (vgl. hierzu die Ausführungsform gemäß Figur 1). Die URL 121 wird dann über die Webseite 117 auf dem Internetbrowser 101 angezeigt, sodass der Nutzer 102 die URL 121 zum Beispiel durch einen Mausklick 123 selektieren kann. Aufgrund dieses Mausklicks wird dann das Client-Programm 103 gestartet sowie auch das Serverprogramm 113.

Das Client-Programm 103 kann beispielsweise die folgenden Funktionalitäten beinhalten:
- Das Client-Programm 103 erzeugt ein Anzeigefenster, indem die in den SAML-Request 126 spezifizierten Attribute angegeben sind. Der Benutzer hat daraufhin die Möglichkeit, diese angefragten Attribute zu bestätigen oder das Auslesen dieser Attribute zu verweigern.
- Nach Bestätigung der Attributspezifizierung durch den Nutzer 102, das heißt der Genehmigung der Ausführung des SAML-Requests 126, generiert das Client-Programm 103 eine Aufforderung für den Nutzer 102 für dessen Authentifizierung gegenüber dem ID-Token 106 und sendet ein entsprechendes Kommando an den ID-Token 106 über die Schnittstelle 104.
- Nachdem die Authentifizierung des Nutzers 102 gegenüber dem ID-Token 106 erfolgreich durchgeführt worden ist, signalisiert das Client-Programm 103 dieses an das Serverprogramm 113. Das Serverprogramm 113 authentifiziert sich daraufhin gegenüber dem ID-Token 106 und liest die in dem SAML-Request 126 spezifizierten Attribute aus dem ID-Token 106 aus, nachdem diese wie oben beschrieben Authentifizierung erfolgt ist.
- Das Serverprogramm 113 generiert dann als Antwort auf den SAML-Request 126 eine SAML-Response 129, welche die aus dem ID-Token 106 ausgelesenen Attribute beinhaltet. Die SAML-Response 129 wird dann von dem Serverprogramm 113 an das Client-Programm 103 gesendet. Dem Client-Programm 103 wird dadurch signalisiert, dass die SAML-Response 129 als Ergebnis 111 in dem Speicher 109 zwischengespeichert wird. Ferner signalisiert das Client-Programm 103 dem Internetbrowser 101 über das Signal 125 (vergleiche Figur 1), dass das Ergebnis 111, das heißt hier die SAML-Response 129, vorliegt. Der Internetbrowser 101 leitet daraufhin die SAML-Response 129 an das Dienst-Computersystem 150 weiter, sodass dieses die erforderlichen Attribute empfängt.

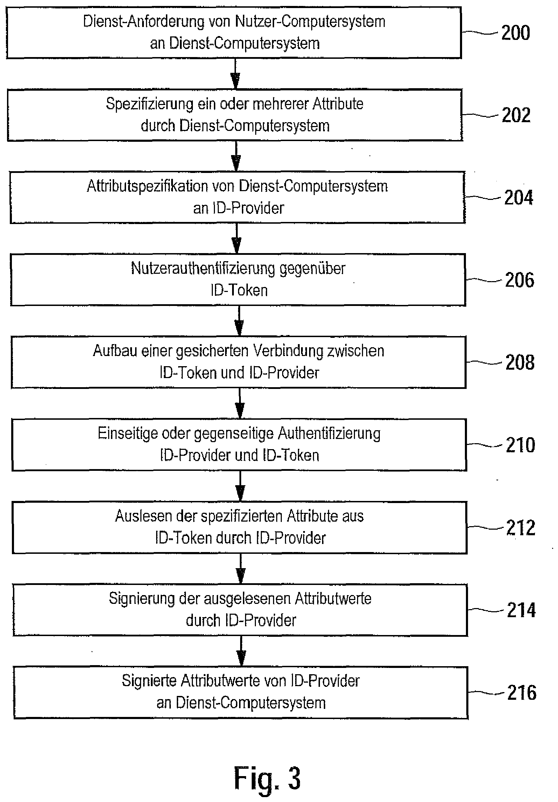

Die Figur 3 zeigt eine Ausführungsform eines erfindungsgemäßen Verfahrens. In dem Schritt 200 wird eine Dienst-Anforderung von dem Nutzer-Computersystem an das Dienst-Computersystem gesendet. Beispielsweise startet der Nutzer hierzu einen Internet-Browser des Nutzer-Computersystems und gibt eine URL zum Aufruf einer Webseite des Dienst-Computersystems ein. In die aufgerufene Webseite gibt der Nutzer dann seine Dienst-Anforderung ein, zum Beispiel zur Bestellung oder Auftragserteilung für einen Dienst oder ein Produkt.

In dem Schritt 202 spezifiziert das Dienst-Computersystem 150 daraufhin ein oder mehrere Attribute, welche es benötigt, um die Berechtigung des Nutzers für die Dienst-Anforderung zu prüfen, und generiert einen SAML request, der diese Attributspezifizierung beinhaltet. Insbesondere kann das Dienst-Computersystem solche Attribute spezifizieren, welche die digitale Identität des Nutzers 102 bestimmen. Diese Spezifizierung der Attribute durch das Dienst-Computersystem 150 kann fest vorgegeben sein oder je nach der Dienst-Anforderung im Einzelfall durch das Dienst-Computersystem 150 anhand vorgegebener Regeln bestimmt werden.

In dem Schritt 204 wird der SAML request von dem Dienst-Computersystem an das Server-Computersystem übertragen, und zwar über das Nutzer-Computersystem. Durch das Nutzer-Computersystem werden vor der Weiterleitung die Parameter 143 (vgl. Fig. 1) in dem SAML request ergänzt.

Das Server-Computersystem generiert daraufhin die URL 121 und gibt diese über die Webseite 117 aus, sodass die URL 121 durch den Internetbrowser 101 angezeigt wird. Der Nutzer kann daraufhin die URL 121 selektieren, beispielsweise durch einen Mausklick, sodass daraufhin das Client-Programm 121 und das Serverprogramm 113 gestartet werden.

Um dem Server-Computersystem die Möglichkeit zu geben, Attribute aus seinem ID-Token auszulesen, authentifiziert sich der Nutzer in dem Schritt 206 gegenüber dem ID-Token.

In dem Schritt 208 wird eine Verbindung zwischen dem ID-Token und dem Server-Computersystem aufgebaut; dies kann durch das Client-Programm 103 erfolgen, welches die Daten von den ID-Token an das Server-Computersystem weiterleitet und umgekehrt. Hierbei handelt es sich vorzugsweise um eine gesicherte Verbindung, beispielsweise nach einem so genannten Secure Messaging-Verfahren.

In dem Schritt 210 erfolgt zumindest eine Authentifizierung des Server-Computersystems gegenüber dem ID-Token über die in dem Schritt 208 aufgebaute Verbindung. Zusätzlich kann eine Authentifizierung auch des ID-Tokens gegenüber dem Server-Computersystem vorgesehen sein.

Nachdem sowohl der Nutzer als auch das Server-Computersystem erfolgreich gegenüber dem ID-Token authentifiziert worden sind, erhält das Server-Computersystem von dem ID-Token die Zugriffsberechtigung zum Auslesen der Attribute. In dem Schritt 212 sendet das Server-Computersystem ein oder mehrere Lesekommandos zum Auslesen der gemäß Attributspezifikation erforderlichen Attribute aus dem ID-Token. Die Attribute werden dann mittels Ende-zu-Ende-Verschlüsselung über die gesicherte Verbindung an das Server-Computersystem übertragen und dort entschlüsselt.

Die ausgelesenen Attributwerte werden in dem Schritt 214 von dem Server-Computersystem signiert und das Server-Computersystem erzeugt die SAML response. In dem Schritt 216 sendet das Server-Computersystem die SAML response mit den signierten Attributwerten über das Netzwerk. Die signierten Attributwerte erreichen das Dienst-Computersystem über das Nutzer-Computersystem. Der Nutzer kann die Möglichkeit haben, die signierten Attributwerte zur Kenntnis zu nehmen und/oder durch weitere Daten zu ergänzen.

### Bezugszeichenliste

- 100: Nutzer-Computersystem
- 101: Internetbrowser
- 102: Nutzer
- 103: Client-Programm
- 104: Schnittstelle
- 105: Betriebssystem
- 106: ID-Token
- 107: Registry
- 108: Schnittstelle
- 109: Speicher
- 110: Prozessor
- 111: Ergebnis
- 103: Programminstruktionen
- 113: Serverprogramm
- 114: Netzwerk-Schnittstelle
- 115: Programm
- 116: Netzwerk
- 117: Webseite
- 118: elektronischer Speicher
- 119: URL-Schema
- 120: geschützter Speicherbereich
- 121: URL
- 122: geschützter Speicherbereich
- 123: Mausklick
- 124: geschützter Speicherbereich
- 125: Signal
- 126: SAML-Request
- 128: Prozessor
- 129: SAML-Response
- 130: Programminstruktionen
- 132: Programminstruktionen
- 134: Programminstruktionen
- 136: Server-Computersystem
- 138: Netzwerk-Schnittstelle
- 140: Speicher
- 141: Parameter
- 142: privater Schlüssel
- 143: Parameter
- 144: Zertifikat
- 145: Prozessor
- 146: Programminstruktionen
- 148: Programminstruktionen
- 149: Programminstruktionen
- 150: Dienst-Computersystem
- 152: Netzwerk-Schnittstelle
- 154: Prozessor
- 156: Programminstruktionen

## Patentansprüche

1. Verfahren zum Aufruf eines Client-Programms (103) über einen Internetbrowser (101) eines Nutzer-Computersystems (100) mit folgenden Schritten:
- Übertragung einer Nachricht über den Internetbrowser an ein Servercomputersystem (136), wobei die Nachricht zumindest einen Parameter (143) zur Kommunikation des Client-Programms mit dem Internetbrowser beinhaltet,
- dynamische Erzeugung einer URL durch das Server-Computersystem, wobei die URL nach einem URL-Schema (119) zum Aufruf des Client-Programms ausgebildet ist, wobei die URL den zumindest einen Parameter beinhaltet, wobei das Client-Programm in dem Betriebssystem (105) des Nutzer-Computersystems unter einem Programmnamen registriert ist, und wobei die URL einen statischen Teil aufweist, der den Programmnamen beinhaltet sowie einen dynamischen Teil, weicher den zumindest einen Parameter beinhaltet;
- Übertragung einer Webseite mit der URL (121) von dem Server-Computersystem an das Nutzer-Computersystem und Anzeige der Webseite mit der URL in einem Browserfenster des Internetbrowser zur Auswahl durch einen Nutzer (102),
- aufgrund der Auswahl der URL durch den Nutzer, Starten des Client-Programms auf dem Nutzer-Computersystem und Eingabe des zumindest einen Parameters in das Client-Programm,
- Kommunikation eines Ergebnisses (111) der Ausführung des Client-Programms von dem Client-Programm an den Internetbrowser mit Hilfe des Parameters.

2. Verfahren nach Anspruch 1 , wobei die URL einen oder mehrere der folgenden Parameter beinhaltet:
- Name des Internetbrowsers,
- einen Prozessidentifikator des Internetbrowsers in einem Betriebssystem (105) des Nutzer-Computersystems,
- eine Antwort-URL zum Aufruf des Internetbrowsers durch das Client-Programm,
- einen Fensteridentifikator eines Anzeigefensters des Internetbrowsers in dem Betriebssystem des Nutzer-Computersystems,
- eine Speicheradresse oder eine Ergebnis-URL zum Abrufen eines Ergebnisses (111) der Ausführung des Client-Programms durch den Internetbrowser.

3. Verfahren nach Anspruch 1 oder 2, wobei die Nachricht als SAML-Anforderung ausgebildet ist, wobei die SAML-Anforderung von dem Nutzer-Computersystem empfangen wird und von dem Nutzer-Computersystem in die SAML-Anforderung der zumindest eine Parameter eingetragen wird, wonach die SAML-Anforderung durch den Internetbrowser an das Server-Computersystem weitergeleitet wird.

4. Verfahren nach einem der vorhergehenden Ansprüche, wobei aufgrund der Selektion der URL auf dem Server-Computersystem ein Serverprogramm (13) gestartet wird, welches mit dem Client-Programm interoperabel ist, wobei das Client-Programm und das Serverprogramm interagieren, um das Ergebnis zu erhalten, welches an den Internetbrowser kommuniziert wird.

5. Verfahren nach Anspruch 4, wobei durch das Server-Computersystem eine SAML-Antwort erzeugt wird, welche das Ergebnis beinhaltet, wobei die SAML-Antwort von dem Server-Computersystem über den Internetbrowser des Nutzer-Computersystems an ein Dienst-Computersystem (150) gesendet wird, welches die SAML-Anforderung gesendet hat.

6. Verfahren nach Anspruch 4 oder 5, wobei auf Seiten des Server-Computersystems eine oder mehrere der folgenden weiteren Parameter gespeichert sind:
- eine Adresse des Serverprogramms, insbesondere eine URL zum Aufruf des Serverprogramms,
- ein Session-Identifier der zwischen dem Internetbrowser und dem Server-Computersystem zur Übertragung der Nachricht aufgebauten Session, - ein Identifikator für ein Sicherheitsprotokoll für die sichere Kommunikation mit dem Internetbrowser,
- Sicherheitsparameter für das Sicherheitsprotokoll,
- ein symmetrischer Schlüssel für die verschlüsselte Kommunikation mit dem Server-Computersystem, wobei die von dem Server-Computersystem dynamisch erzeugte URL einen oder mehrere dieser weiteren Parameter beinhaltet.

7. Verfahren nach Anspruch 4, 5 oder 6, wobei durch die Interaktion des Client-Programms und des Serverprogramms die folgenden Schritte durchgeführt werden:
- Ausgabe einer Aufforderung an den Nutzer zur Authentifizierung gegenüber einem ID-Token (106), der dem Nutzer zugeordnet ist,
- Authentifizierung des Server-Computersystems gegenüber dem ID-Token, - nach erfolgreicher Authentifizierung des Nutzers und des Server-Computersystems gegenüber dem ID-Token, Lesezugriff des Server-Computersystems auf zumindest ein in dem ID-Token gespeichertes Attribut, wobei es sich bei dem gelesenen Attribut um das Ergebnis (1 11) handelt.

8. Verfahren nach Anspruch 5, 6 oder 7, wobei die SAML-Antwort das zumindest eine Attribut beinhaltet.

9. Verfahren nach einem der vorhergehenden Ansprüche 7 oder 8, wobei zwischen dem ID-Token und dem Serverprogramm über das Nutzer-Computersystem eine Verbindung mit Ende-zu-Ende-Verschlüsselung aufgebaut wird, über welche der Lesezugriff erfolgt.

10. Computerprogrammprodukt, insbesondere digitales Speichermedium, mit ausführbaren Programminstruktionen zur Durchführung eines Verfahrens nach einem der vorhergehenden Patentansprüche.

11. Nutzer-Computersystem mit einem Betriebssystem (105) zur Ausführung eines Client-Programms (103) und eines Internetbrowsers (101) in separate Prozessräumen, wobei der Internetbrowser zur Übertragung einer Nachricht an ein Server-Computersystem ausgebildet ist, wobei die Nachricht zumindest einen Parameter (143) zur Kommunikation des Client-Programms mit dem Internetbrowser beinhaltet, und wobei das Betriebssystem dazu eingerichtet ist, dass das Client-Programm aufgrund der Auswahl einer URL durch einen Benutzer gestartet wird und dabei zumindest ein Parameter in das Client-Programm eingegeben wird, wobei das Client-Programm in dem Betriebssystem (105) des Nutzer-Computersystems unter einem Programmnamen registriert ist, und wobei die URL einen statischen Teil aufweist, der den Programmnamen beinhaltet sowie einen dynamischen Teil, welcher den zumindest einen Parameter beinhaltet, wobei die Auswahl der URL durch Selektion der URL auf einer von dem Internetbrowser angezeigten Webseite erfolgt, wobei die URL den zumindest einen Parameter beinhaltet, wobei das Client-Programm so ausgebildet ist, dass ein Ergebnis der Ausführung des Client-Programms mit Hilfe des zumindest einen Parameters von dem Client-Programm an den Internetbrowser kommuniziert wird.

12. Nutzer-Computersystem nach Anspruch 11, wobei der Internetbrowser zum Empfang der Nachricht und zur Weiterleitung der Nachricht in Form einer SAML-Anforderung ausgebildet ist.

13. Nutzer-Computersystem nach Anspruch 11 oder 12, mit einer Schnittstelle (104) zur Kommunikation mit einem ID-Token, wobei über die Nutzer-Schnittstelle eine Verbindung mit Ende-zu-Ende-Verschlüsselung zu dem ID-Token aufbaubar ist, um ein Auslesen von zumindest einem Attribut aus dem ID-Token zu ermöglichen, wobei der Internetbrowser zum Weiterleiten einer das zumindest eine Attribut beinhaltenden SA L-Antwort ausgebildet ist.

14. Server-Computersystem mit
- Mitteln zum Empfang einer Nachricht von dem Internetbrowser (101) eines Nutzer-Computersystems (100), wobei die Nachricht zumindest einen Parameter (143) zur Kommunikation eines Client-Programms (103) mit dem Internetbrowser beinhaltet,
- Mitteln zur dynamischen Erzeugung einer URL durch das Server-Computersystem, wobei die URL nach einem URL-Schema (119) zum Aufruf des Client-Programms ausgebildet ist, wobei das Client-Programm in dem Betriebssystem (105) des Nutzer-Computersystems unter einem Programmnamen registriert ist, und wobei die URL einen statischen Teil aufweist, der den Programmnamen beinhaltet sowie einen dynamischen Teil, welcher den zumindest einen Parameter beinhaltet, und zur Erzeugung einer Webseite (117) mit der URL (121)
- Mitteln zur Übertragung der Webseite von dem Server-Computersystem an das Nutzer-Computersystem zur Auswahl der URL durch einen Nutzer (102).

15. Server-Computersystem nach Anspruch 14, mit einem Serverprogramm (3), welches mit dem Client-Programm interoperabel ist, wobei das Serverprogramm aufgrund der Auswahl der URL durch den Nutzer gestartet werden kann.

## Claims

1. A method for invoking a client program (103) via an Internet browser (101) of a user computer system (100), comprising the following steps:
- transmitting a message via the Internet browser to a server computer system (136), wherein the message includes at least one parameter (143) for the client program to communicate with the Internet browser;
- dynamically generating a URL by the server computer system, wherein the URL is formed according to a URL pattern (119) for invoking the client program, wherein the URL includes the at least one parameter, wherein the client program is registered in the operating system (105) of the user computer system under a program name, and wherein the URL includes a static part that comprises the program name and a dynamic part that comprises the at least one parameter;
- transmitting a website having the URL (121) from the server computer system to the user computer system, and displaying the website having the URL in a browser window of the Internet browser for selection by a user (102),
- starting the client program on the user computer system based on the selection of the URL by the user, and entering the at least one parameter into the client program; and
- communicating a result (111) of the execution of the client program from the client program to the Internet browser, using the parameter.

2. The method according to claim 1, wherein the URL includes one or more of the following parameters:
- name of the Internet browser;
- a process identifier of the Internet browser in an operating system (105) of the user computer system;
- a response URL for invoking the Internet browser by the client program;
- a window identifier of a display window of the Internet browser in the operating system of the user computer system; and
- a memory address or a results URL for invoking a result (111) of the execution of the client program by the Internet browser.

3. The method according to claim 1 or 2, wherein the message is designed as a SAML request, the SAML request being received by the user computer system, and the at least one parameter being incorporated by the user computer program into the SAML request, whereupon the SAML request is forwarded by the Internet browser to the server computer system.

4. The method according to any one of the preceding claims, wherein, based on the selection of the URL on the server computer system, a server program (13) is started which is interoperable with the client program, the client program and the server program interacting so as to obtain the result that is communicated to the Internet browser.

5. The method according to claim 4, wherein a SAML response that includes the result is generated by the server computer system, the SAML response being transmitted from the server computer system via the Internet browser of the user computer system to a service computer system (150) which transmitted the SAML request.

6. The method according to claim 4 or 5, wherein one or more of the following additional parameters are stored on the part of the server computer system:
- an address of the server program, and in particular a URL for invoking the server program;
- a session identifier of the session established between the Internet browser and the server computer system for the transmission of the message;
- an identifier for a security protocol for the secure communication with the Internet browser;
- a security parameter for the security protocol;
- a symmetric key for the encrypted communication with the server computer system, wherein the URL dynamically generated by the server computer system includes one or more of these additional parameters.

7. The method according to claim 4, 5 or 6, wherein the following steps are carried out as a result of the interaction between the client program and the server program:
- outputting a request to the user for authentication with respect to an ID token (106) assigned to the user;
- authenticating the server computer system with respect to the ID token; and
- after the user and the server computer system have been successfully authenticated with respect to the ID token, providing read access of the server computer system to at least one attribute stored in the ID token, the read attribute being the result (111).

8. The method according to claim 5, 6 or 7, wherein the SAML response includes the at least one attribute.

9. The method according to either the preceding claim 7 or 8, wherein a connection having end-to-end encryption, via which the read access takes place, is established between the ID token and the server program via the user computer system.

10. A computer program product, in particular a digital storage medium, comprising executable program instructions for carrying out a method according to any one of the preceding claims

11. A user computer system, comprising an operating system (105) for executing a client program (103) and an Internet browser (101) in separate process areas, wherein the Internet browser is designed to transmit a message to a server computer system, the message including at least one parameter (143) for the client program to communicate with the Internet browser, and wherein the operating system is configured such that the client program is started by a user based on the selection of a URL and at least one parameter is entered into the client program, the client program being registered in the operating system (105) of the user computer system under a program name, and the URL including a static part that comprises the program name and a dynamic part that comprises the at least one parameter, the URL being selected by the selection of the URL on a website displayed by the Internet browser, the URL including the at least one parameter, the client program being designed in such a way that a result of the execution of the program is communicated by the client program to the Internet browser by way of the at least one parameter.

12. The user computer system according to claim 11, wherein the Internet browser is designed to receive the message and to forward the message in the form of a SAML request.

13. The user computer system according to claim 11 or 12, comprising an interface (104) for the communication with the ID token, wherein a connection having end-to-end encryption to the ID token can be established via the user interface so as to allow at least one attribute to be read out from the ID token, the Internet browser being designed to forward a SAML response including the at least one attribute.

14. A server computer system, comprising:
- means for receiving a message from the Internet browser (101) of a user computer system (100), wherein the message includes at least one parameter (143) for a client program (103) to communicate with the Internet browser;
- means for dynamically generating a URL by the server computer system, wherein the URL is designed according to a URL pattern (119) for invoking the client program, the client program being registered in the operating system (105) of the user computer system under a program name, and the URL including a static part that comprises the program name and a dynamic part that comprises the at least one parameter, and for generating a website (117) having the URL (121); and
- means for transmitting the website from the server computer system to the user computer system for the selection of the URL by a user (102).

15. The server computer system according to claim 14, comprising a server program (3) that is interoperable with the client program, wherein the server program can be started by the user based on the selection of the URL.

## Revendications

1. Procédé d'appel d'un programme client (103) par le biais d'un navigateur internet (101) d'un système informatique d'utilisateur (100) avec les étapes suivantes :
- transmission d'un message par le biais du navigateur internet à un système informatique serveur (136), où le message contient au moins un paramètre (143) pour la communication du programme client avec le navigateur internet,
- création dynamique d'un localisateur uniforme de ressources URL par le système informatique serveur, où l'URL est conçu selon un schéma d'URL (119) pour l'appel du programme client, où l'URL contient l'au moins un paramètre, où le programme client est enregistré dans le système d'exploitation (105) du système informatique d'utilisateur sous un nom de programme, et où l'URL présente une partie statique qui contient le nom de programme ainsi qu'une partie dynamique, laquelle contient l'au moins un paramètre ;
- transmission d'une page web avec l'URL (121) du système informatique serveur vers le système informatique d'utilisateur et affichage de la page web avec l'URL dans une fenêtre de navigateur du navigateur internet pour la sélection par un utilisateur (102),
- en raison de la sélection de l'URL par l'utilisateur, démarrage du programme client sur le système informatique d'utilisateur et entrée de l'au moins un paramètre dans le programme client,
- communication d'un résultat (111) de l'exécution du programme client par le programme client au navigateur internet à l'aide du paramètre.

2. Procédé selon la revendication 1, dans lequel l'URL contient un ou plusieurs des paramètres suivants :
- le nom du navigateur internet,
- un identifiant de processus du navigateur internet dans un système d'exploitation (105) du système informatique d'utilisateur,
- un URL de réponse pour l'appel du navigateur internet par le programme client,
- un identifiant de fenêtre d'une fenêtre d'affichage du navigateur internet dans le système d'exploitation du système informatique d'utilisateur,
- une adresse de mémoire ou un URL de résultat pour la restitution d'un résultat (111) de l'exécution du programme client par le navigateur internet.

3. Procédé selon la revendication 1 ou 2, dans lequel le message est conçu sous forme de notification en SAML, où la notification en SAML est reçue par le système informatique d'utilisateur et l'au moins un paramètre est reporté par le système informatique d'utilisateur dans la notification en SAML, à la suite de quoi, la notification en SAML est transmise vers le système informatique serveur par le navigateur internet.

4. Procédé selon l'une des revendications précédentes, dans lequel, en raison de la sélection de l'URL sur le système informatique serveur, un programme serveur (13) est démarré, lequel est inter-opérationnel avec le programme client, où le programme client et le programme serveur interagissent afin d'obtenir le résultat, lequel est communiqué au navigateur internet.

5. Procédé selon la revendication 4, dans lequel une réponse en SAML, laquelle contient le résultat, est générée par le système informatique serveur, où la réponse en SAML est envoyée par le système informatique serveur à un système informatique de service (150), lequel a envoyé la notification en SAML, par le biais du navigateur internet du système informatique d'utilisateur.

6. Procédé selon la revendication 4 ou 5, dans lequel, sur des pages du système informatique serveur sont enregistrés un ou plusieurs parmi les autres paramètres suivants :
- une adresse du programme serveur, notamment un URL pour l'appel du programme serveur,
- un identifiant de session de la session construite entre le navigateur internet et le système informatique serveur pour la transmission du message,
- un identifiant pour un protocole de sécurité pour la communication sécurisée avec le navigateur internet,
- des paramètres de sécurité pour le protocole de sécurité,
- une clé symétrique pour la communication encryptée avec le système informatique serveur, où l'URL généré dynamiquement par le système informatique serveur contient un ou plusieurs de ces autres paramètres.

7. Procédé selon les revendications 4, 5 ou 6, dans lequel, par l'interaction du programme client et du programme serveur, les étapes suivantes sont exécutées :
- émission d'une demande à l'utilisateur pour l'authentification vis-à-vis d'un jeton d'identification (106) qui est associé à l'utilisateur,
- authentification du système informatique serveur vis-à-vis du jeton d'identification, - après l'authentification réussie de l'utilisateur et du système informatique serveur vis-à-vis du jeton d'identification, accès en lecture du système informatique serveur sur au moins un attribut stocké dans le jeton d'identification, où il s'agit du résultat (111) dans le cas de l'attribut lu.

8. Procédé selon les revendications 5, 6, ou 7, dans lequel la réponse en SAML contient l'au moins un attribut.

9. Procédé selon l'une des revendications précédentes 7 ou 8, dans lequel une liaison avec un cryptage de bout en bout, par laquelle l'accès en lecture a lieu, est établie entre le jeton d'identification et le programme serveur par le biais du système informatique d'utilisateur.

10. Produit de programme informatique, notamment support de mémoire numérique avec des instructions de programme exécutables pour l'exécution du procédé selon l'une des revendications de brevet précédentes.

11. Système informatique d'utilisateur avec un système d'exploitation (105) pour l'exécution d'un programme client (103) et un navigateur internet (101) dans des lieux de traitement séparés, où le navigateur internet est conçu pour la transmission d'un message à un système informatique serveur, où le message contient au moins un paramètre (143) pour la communication du programme client avec le navigateur internet, et où le système d'exploitation est installé pour que le programme client soit démarré en raison de la sélection d'un URL par un utilisateur, et qu'ainsi au moins un paramètre est indiqué dans le programme client, où le programme client est enregistré dans le système d'exploitation (105) du système informatique d'utilisateur sous un nom de programme, et où l'URL présente une partie statique qui contient le nom de programme , ainsi qu'une partie dynamique, laquelle contient l'au moins un paramètre, où la sélection de l'URL a lieu par une sélection des URL sur une page web indiquée par le navigateur internet, où l'URL contient l'au moins un paramètre, où le programme client est conçu de telle manière qu'un résultat de l'exécution du programme client est communiqué à l'aide de l'au moins un paramètre par le programme client au navigateur internet.

12. Système informatique d'utilisateur selon la revendication 11, dans lequel le navigateur internet est conçu pour la réception du message et pour la transmission du message sous la forme d'une demande en SAML.

13. Système informatique d'utilisateur selon la revendication 11 ou 12, doté d'une interface (104) pour la communication avec un jeton d'identification, où une liaison avec un cryptage de bout en bout peut être construite vers le jeton d'identification par le biais de l'interface d'utilisateur, afin de permettre une lecture d'au moins un attribut à partir du jeton d'identification, où le navigateur internet est conçu pour la transmission d'une réponse en SAML contenant l'au moins un attribut.

14. Système informatique serveur avec
- des moyens pour la réception d'un message du navigateur internet (101) d'un système informatique d'utilisateur (100), où le message contient au moins un paramètre (143) pour la communication d'un programme client (103) avec le navigateur internet,
- des moyens pour la génération dynamique d'un URL par le système informatique serveur, où l'URL est conçu selon un schéma d'URL (119) pour l'appel du programme client,
où le programme client est enregistré dans le système d'exploitation (105) du système informatique d'utilisateur sous un nom de programme, et où l'URL présente une partie statique qui contient le nom de programme, ainsi que d'une partie dynamique, laquelle contient l'au moins un paramètre, et pour la création d'une page web (117) avec l'URL (121),
- des moyens pour la transmission de la page web du système informatique serveur vers le système informatique d'utilisateur pour la sélection de l'URL par l'utilisateur (102).

15. Système informatique serveur selon la revendication 14, avec un programme serveur (3), lequel est inter-opérationnel avec le programme client, où le programme serveur peut être démarré par l'utilisateur en raison de la sélection de l'URL.
